# FASCICULE DE BREVET EUROPEEN

(11) **EP 2 776 182 B1**
(45) Date de publication et mention de la délivrance du brevet: **05.12.2018**
(21) Numéro de dépôt: 12783604.7
(22) Date de dépôt: 08.11.2012
(51) Int. Cl.: B21D 39/06, B21D 39/20, B21D 53/08, F28D 1/053, F28F 1/02, F28F 1/32

(54) **PROCEDE DE FABRICATION D'UN ECHANGEUR DE CHALEUR**
VERFAHREN ZUR HERSTELLUNG EINES WÄRMETAUSCHERS
METHOD FOR PRODUCING A HEAT EXCHANGER

(30) Priorité: 10.11.2011 FR 1160286
(43) Date de publication de la demande: 17.09.2014
(73) Titulaire: Valeo Systemes Thermiques, 78320 Le Mesnil-Saint-Denis (FR)
(72) Inventeur: BOISSELLE, Patrick, 53000 Laval (FR); BRY, Samuel, 53260 Parne sur Roc (FR)
(74) Mandataire: Metz, Gaëlle
(86) Numéro de dépôt international: PCT/EP2012/072174
(87) Numéro de publication internationale: WO 2013/068488

(56) Documents cités:
- EP-A1- 0 692 692
- DE-U1- 9 315 296
- GB-A- 2 358 242
- JP-A- 2000 312 938
- JP-U- 59 134 771

## Description

La présente invention concerne un procédé de fabrication d'un échangeur de chaleur selon le préambule de la revendication 1. Un tel procédé est, par exemple, décrit dans le document DE-U-9315296.

Dans une application préférentielle, quoique non exclusive, les échangeurs thermiques concernés sont destinés à être montés sur des véhicules pour servir de radiateurs de refroidissement aux moteurs thermiques équipant ces véhicules.

Dans les applications automobiles, il est connu deux types principaux d'échangeurs de chaleur, un premier type, dit mécanique, correspondant à des échangeurs obtenus par assemblage de leurs composants par déformation de matière, et des échangeurs dit brasés, correspondant à des échangeurs obtenus par assemblage de leurs composants par brasage.

Les échangeurs mécaniques sont constitués principalement d'un faisceau de tubes parallèles disposés en un ou plusieurs rangs et dans lesquels circule un fluide caloporteur, dans notre cas, de l'eau glycolée, et d'une pluralité d'ailettes disposées perpendiculairement aux tubes et pourvues d'orifices traversés par ceux-ci. Les ailettes ont pour fonction d'augmenter la surface d'échange avec l'air traversant l'échangeur. On obtient ainsi un échange de chaleur entre le fluide circulant dans les tubes et l'air passant entre les ailettes.

On assure le maintien des ailettes sur les tubes ainsi que le maintien des tubes sur les plaques collectrices à l'aide d'une expansion des tubes. Plus précisément, une olive d'expansion est passée le long des tubes, à l'intérieur de ceux-ci. Elle a pour effet de déformer la matière des tubes en augmentant leur section et permet ainsi de les appliquer contres les ailettes.

Les ailettes d'échange thermique se présentent sous la forme d'une plaque généralement mince rectangulaire dans laquelle sont ménagés un ou plusieurs rangs parallèles d'orifices identiques pour le passage des tubes perpendiculairement au plan des plaques. Pour assurer un bon échange thermique, il est nécessaire que le contact entre les tubes et les ailettes soit de bonne qualité, ceci sur l'ensemble du contour des orifices de passage des tubes.

Pour améliorer ce contact, il a déjà été proposé de nombreuses solutions telles que la formation de collets à la périphérie des orifices de passage des tubes dans les ailettes. Ces collets sont formés par un bord relevé des orifices de passage venant en contact avec le tube.

Cependant, en raison de l'élasticité de leur matière, les tubes présentent une tendance résiduelle à reprendre la configuration qu'ils présentaient avant expansion, en particulier pour les tubes présentant une forme complexe, plus particulièrement les tubes présentant des contours munis de parties concaves. Avec de tels tubes, on a constaté que le contact tubes ailettes est ainsi pénalisé, en particulier dans les parties concaves du contour des tubes, ce qui dégrade l'échange thermique et diminue les performances de l'échangeur.

La présente invention a pour but de remédier à ces inconvénients et concerne un procédé de fabrication d'un échangeur de chaleur, notamment automobile, procédé dans lequel on introduit des tubes de circulation de fluide dans des orifices de passage d'ailettes d'échange de chaleur et on soumet les tubes de circulation de fluide à une expansion de sorte à élargir un contour desdits tubes pour assurer un contact avec lesdites ailettes au niveau desdits orifices de passage et, de manière supplémentaire, pour au moins un desdits tubes, à déformer une partie concave du contour du ou desdits tubes, de façon à obtenir en correspondance une déformation desdits orifices de passage.

On réalise de la sorte une sur expansion localisée des tubes qui permet de créer des zones de contact forcée entre ces derniers et le contour des orifices de passage. On limite ainsi les risques de mauvais contact avec les ailettes qui serait dû à un retour partiel des tubes à leur état avant expansion. De plus, on augmente la section de passage du fluide ce qui permet de réduire les pertes de charge de l'échangeur.

Selon différents modes de réalisation de l'invention, qui pourront être pris ensemble ou séparément :
- ladite expansion est configurée de sorte à créer une ou des protubérances, saillantes en direction des ailettes, provoquant ladite déformation des orifices de passage prévue dans la partie concave du tube,
- la ou lesdites protubérances sont réalisées par déformation de la matière du tube,
- la ou les protubérances se présentent sous la forme d'un pli de la matière du tube,
- le pli se présente sous la forme d'un dièdre au sommet arrondi,
- la ou lesdites protubérances s'étendent selon un axe longitudinal des tubes,
- la ou lesdites protubérances sont situées dans un fond de ladite partie concave,
- les tubes comprennent deux grandes faces reliées par des flancs latéraux du tube, chacune des grandes faces étant munie d'une dite partie concave, chaque dite partie concave étant munie d'une ou plusieurs dites protubérances,
- les ailettes sont munies, au niveau desdits orifices de passage, de collets destinés à augmenter la surface de contact avec les tubes et ladite expansion est configurée pour déformer lesdits collets,
- avant expansion, les orifices de passages des ailettes présentent un contour de forme homologue à celle du contour des tubes.

Une olive d'expansion et un dispositif de d'expansion de tubes, comprenant ladite olive, peuvent être utilisés pour la mise en oeuvre dudit procédé.

Ladite olive présente un contour configuré pour soumettre un tube de circulation de fluide à une expansion de sorte à élargir un contour dudit tube et, de manière supplémentaire, à obtenir une déformation d'une partie concave du contour du tube.

Ladite olive comprend, par exemple, au moins une nervure au niveau d'une partie concave du contour de ladite olive, la ou lesdites nervures permettant de réaliser ladite déformation d'une partie concave du tube.

Les figures annexées feront bien comprendre comment l'invention peut être réalisée. Sur ces figures, des références identiques désignent des éléments semblables.
La figure 1 est une vue schématique en plan d'un échangeur de chaleur de type mécanique équipé de tubes et d'ailettes de refroidissement.
Les figures 2a à 2c illustre schématiquement les différentes étapes d'un exemple de réalisation du procédé conforme à l'invention, en montrant un tube coupé transversalement et une portion d'ailette.
La figure 3 est une vue en perspective permettant d'illustrer une partie d'un tube et des ailettes de l'échangeur de chaleur obtenu par le procédé des figures 2.
La figure 4 illustre en perspective un exemple d'olive d'expansion servant à la mise en oeuvre du procédé illustré aux figures 2.

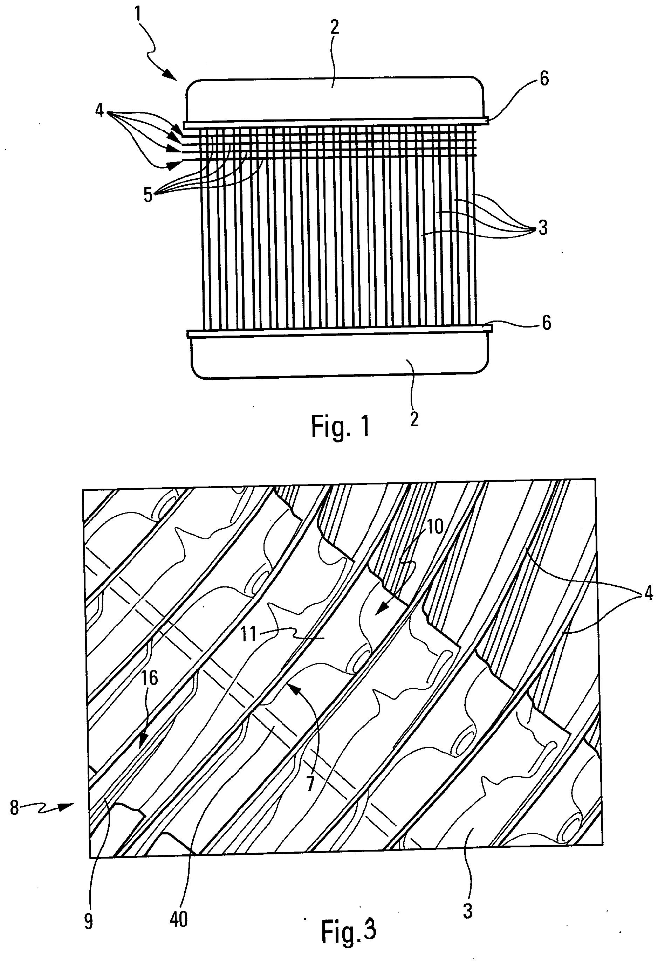

Comme illustré à la figure 1, un échangeur de chaleur 1 du type mécanique se compose principalement d'un faisceau de tubes 3, dans lesquels circule un fluide caloporteur, et d'ailettes de refroidissement ou de dissipation thermique 4, traversées par les tubes 3. Il comprend de plus, notamment, deux boîtes collectrices d'extrémité 2 espacées parallèlement l'une de l'autre et reliées par les tubes 3. Ces derniers sont, par exemple, alignés parallèlement et les ailettes 4, prévues parallèles entre elles, sont disposées perpendiculairement auxdits tubes 3.

Brièvement, dans le cas d'une application en tant que radiateur de refroidissement d'un moteur de véhicule automobile, le fluide caloporteur issu des tubes et passant par l'une des boîtes collectrices, est amené, par une conduite d'alimentation, aux différents organes chauds du moteur (bloc moteur, culasse, ...) à refroidir pour être renvoyé, en étant alors réchauffé, par une conduite de retour vers l'autre boîte collectrice du radiateur pour circuler à nouveau dans les tubes. Aussi, l'échange thermique entre le fluide caloporteur chaud en circulation dans les tubes de l'échangeur et un fluide extérieur (par exemple l'air ambiant) passant entre lesdits tubes pour abaisser la température du fluide caloporteur, est favorisé par la présence des ailettes dont la forme, le nombre et la matière sont choisis pour optimiser l'évacuation d'une quantité de chaleur importante dans le but d'amener progressivement le fluide caloporteur traversant l'échangeur à une plage de températures acceptable et efficace pour refroidir le moteur.

Plus particulièrement, les deux boîtes collectrices 2 sont mises en communication de fluide par l'intermédiaire des tubes alignés 3 dont les extrémités sont ici raccordées fixement et avec étanchéité à des plaques respectives 6 des boîtes, et dans lesquels circule, d'un boîtier à l'autre, le fluide caloporteur. Ce dernier est, par exemple, de l'eau glycolée lorsque l'échangeur 1 fait office de radiateur de refroidissement d'un moteur thermique, comme dans le cas présent. Les raccords d'alimentation et de retour du fluide prévus dans les boîtes respectives menant au moteur et revenant de celui-ci n'ont pas été représentés.

Transversalement à ces tubes alignés 3 sont disposées les ailettes d'échange thermique 4 entre le fluide chaud à refroidir circulant dans les tubes et l'air ambiant frais extérieur. Ces ailettes 4 sont structurellement identiques entre elles et sont disposées parallèlement les unes aux autres, en étant séparées l'une de l'autre par un pas avantageusement constant. Les dimensions de l'ailette en plan correspondent sensiblement à celles des boîtes collectrices 2 à des fins de compacité de l'échangeur de chaleur 1.

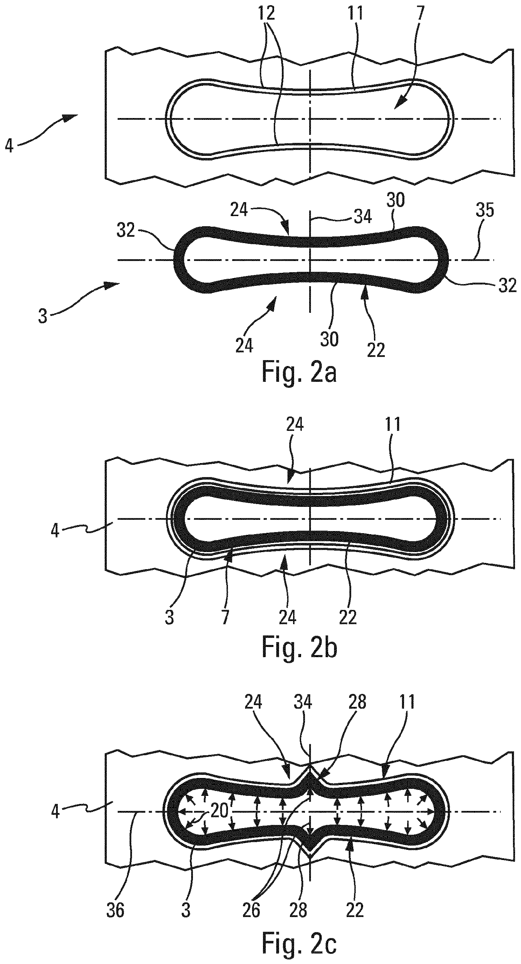

Comme illustré aux figures 2a à 2c, l'invention concerne un procédé de fabrication d'un échangeur tel que celui évoqué plus haut.

La figure 2a illustre une ailette 4 (en haut) et un tube 3 (en bas), avant montage l'un sur l'autre. Même s'il n'est ici représenté qu'un seul orifice 7 et qu'un seul tube 3, lesdits orifices de passage 7 d'une même ailette et lesdits tubes 3 d'un même faisceau seront, par exemple, respectivement identiques.

Les ailettes 4 se présentent, par exemple, sous la forme d'une plaque ou tôle mince, généralement rectangulaire, dont l'épaisseur est inférieure au dixième de millimètre. Elles sont obtenues, notamment, par emboutissage. La matière constituant les ailettes 4 est en général un alliage métallique, par exemple, d'aluminium (voire de cuivre) pour sa capacité d'échange thermique. Chaque ailette 4 comporte des orifices 7 pour le passage des tubes 3.

Lesdits tubes 3 sont, par exemple, en un alliage métallique tel que de l'aluminium (voire du cuivre). Ils sont obtenus, notamment, par électro-soudage ou encore par extrusion.

Comme illustré à la figure 2b, on introduit tout d'abord les tubes 3 dans les orifices 7 de passage des ailettes 4. A cette figure, on constate que les tubes 3 ont alors une section plus faible que celle des orifices de passage 7, permettant de la sorte aux tubes 3 d'être introduits dans les ailettes 7 avec un léger jeu, évitant aux ailettes d'être déformées pendant cette étape.

Comme illustré à la figure 2c, on soumet alors les tubes 3 de circulation de fluide à une expansion, selon les flèches repérées 20, de sorte à élargir un contour 22 desdits tubes 3 pour assurer un contact avec lesdites ailettes 3 au niveau desdits orifices de passage 7. Autrement dit, on augmente la section transversale des tubes 3. Cette expansion est réalisée, par exemple, sur tout le contour 22 desdits tubes 3. Elle pourra entrainer une déformation des orifices de passage.

Selon l'invention, ladite expansion sert, de manière supplémentaire, à déformer une partie concave 24 du contour desdits tubes 3, de façon à obtenir en correspondance une déformation desdits orifices de passage 7. On réalise de la sorte une déformation locale de la section desdits tubes 3 dont le contour, après expansion n'est pas une homothétie du contour avant expansion. Les flèches repérées 26 servent à illustrer cette sur expansion subie par le tube 3 au droit de sa ou ses parties concaves 24.

Ladite expansion est configurée de sorte à créer, par exemple, une ou des protubérances 28, saillantes en direction des ailettes 4, provoquant ladite déformation des orifices 7 de passage prévue dans la ou les parties concaves 24 du tube. La ou lesdites protubérances 28 sont réalisées, notamment, par déformation de la matière du tube.

La ou lesdites protubérances 28 se présentent, par exemple, sous la forme d'un pli de la matière du tube 3 qui pourra avoir la forme d'un dièdre au sommet arrondi.

La ou lesdites protubérances 28 s'étendent ici selon un axe longitudinal des tubes 3. Elles sont situées dans un fond de ladite partie concave. Par « fond », on entend la partie du contour 22 du tube 3 la plus saillante vers l'intérieur du tube, avant expansion.

Les tubes 3 comprennent, par exemple, deux grandes faces 30 reliées par des flancs latéraux 32, notamment arrondis du tube 3. Chacune des grandes faces 30 est ici munie d'une dite partie concave 24 du contour 22. Lesdites parties concaves 24 pourront être sensiblement symétriques par rapport à un premier plan perpendiculaire aux plans tangents au contour 22 du tube 3 et passant par le fond desdites parties concaves 24, ici le plan perpendiculaire à la planche de dessins et passant par l'axe de symétrie 34. Les tubes 3 pourront présenter un second de plan de symétrie 36, situé entre lesdits plans tangents au contour 22 du tube 3 et passant par le fond des parties concaves 24.

Lesdits tubes 3 présentent, par exemple, une section allongée, notamment oblongue, d'un flanc latéral 32 à l'autre. Lesdits tubes 3 pourront être de section constante, au moins dans la partie centrale du faisceau, c'est-à-dire dans la partie du faisceau munie des ailettes 4.

Comme cela apparaît plus particulièrement à la figure 2a, avant expansion, les orifices de passages 7 des ailettes pourront présenter un contour de forme homologue à celle du contour des tubes. Par forme « homologue », on entend que la forme des tubes 3 est homothétique de celle des orifices de passage 7, la section des tubes avant expansion étant, comme déjà dit, inférieure à celle des orifices de passage pour faciliter l'insertion desdits tubes 3 dans les ailettes 4.

Autrement dit, les orifices de passage 7 sont agencés dans le sens de la largeur des ailettes 4 et comprennent deux grands côtés 12 et reliés l'un à l'autre par deux bords d'extrémité arrondis, demi-circulaires en correspondances des flancs latéraux 32 des tubes 3.

Après expansion, chaque dite partie concave 24 pourra être munie d'une ou plusieurs dites protubérances 28. Lesdites protubérances 28 sont disposées, par exemple, de façon symétrique par rapport au second plan de symétrie 36 du tube 3. Il est prévu, notamment, une seule protubérance 28 sur chaque partie concave 24, au niveau du premier plan 34 de symétrie du tube. Dans des variantes non illustrées, il est prévu plusieurs protubérances 28 sur l'un et/ou chacun des grands côtés des tubes 3, éventuellement décalées d'un côté à l'autre.

Les ailettes 4 pourront être munies, au niveau desdits orifices de passage 7, de collets 11 destinés à augmenter la surface de contact avec les tubes 3 et ladite expansion est configurée pour déformer lesdits collets 11. Plus précisément, lors de l'expansion, lesdits collets 11 sont déformés au moins au niveau du ou des protubérances 28. Ils présentent de la sorte une forme en creux en correspondance.

Chaque orifice oblong 7 est ici délimité, sur toute sa périphérie, par lesdits collets 11 réalisé à partir d'opérations mécaniques de découpe et de pliage usuelles (ou emboutissage) de la matière même de l'ailette et faisant saillie perpendiculairement de celle-ci.

Comme illustré à la figure 3, les ailettes pourront aussi comprendre des persiennes 8 à lamelles inclinées 9 pour la circulation forcée de l'air ambiant de refroidissement, et des moyens d'espacement 10 matérialisant le pas entre les ailettes 4 et issus de la matière même de ces dernières.

Les persiennes 8 (encore appelées déflecteurs) à lamelles inclinées 9 sont prévues entre deux orifices oblongs consécutifs 7 et leur fonction est de défléchir et perturber le flux de l'air ambiant frais venant de l'extérieur pour l'amener entre les ailettes 4 de manière à participer activement aux échanges thermiques avec les tubes 3 pour refroidir l'échangeur et son fluide caloporteur. Chaque persienne 8 comprend une série de lamelles successives et parallèles 9, orientées selon la longueur de l'ailette. Et ces lamelles 9 sont principalement obtenues par découpe partielle appropriée dans l'ailette 4, puis par pliage (ou emboutissage) de manière à former un angle d'inclinaison choisi par rapport à l'ailette dont elles sont issues, en créant ainsi des ouvertures 16 dans l'ailette pour la circulation canalisée de l'air d'une ailette à l'autre.

Les tubes 3 présentent une ou des nervures 40 allongées selon l'axe longitudinal des tubes 3 en contact avec orifices de passage des ailettes. La ou lesdites nervures 40 correspondent aux protubérances 28 résultant de l'expansion des tubes 3.

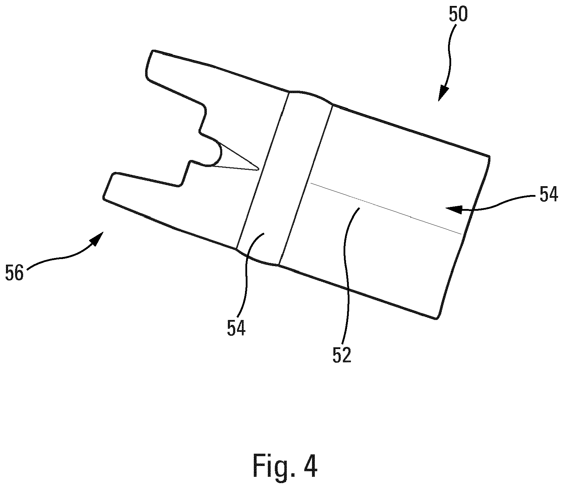

Comme illustré à la figure 4, une olive 50 d'expansion peut, par exemple, être utilisée pour la mise en oeuvre du procédé décrit plus haut.

Ladite olive 50 présente un contour configuré pour soumettre les tubes de circulation de fluide à une expansion de sorte à élargir le contour des tubes et, de manière supplémentaire, à obtenir la déformation de la ou des parties concaves du contour des tubes. Pour cela, après avoir introduit les tubes dans les ailettes, on fait circuler des telles olives 50 dans chacun des tubes de l'une de leur extrémité à l'autre.

Ladite olive 50 comprend au moins une nervure 52 au niveau d'une partie concave 54 du contour de ladite olive, la ou lesdites nervures 52 permettant de réaliser la déformation de la ou des parties concaves du tube. Autrement dit, ladite olive 50 présente un contour homologue à celle des tubes 3 après expansion.

Ladite olive pourra présenter une partie 54 en surépaisseur provoquant l'expansion des tubes 3. L'une des extrémités 56 de l'olive est ici configurée de façon à faciliter l'introduction et la progression de l'olive dans les tubes.

Pour la mise en oeuvre du procédé, un dispositif d'expansion de tubes utilisant ladite olive peut être utilisé. Cette dernière étant mise à part, un tel dispositif, non illustré, est connu de l'homme de l'art. Il comprend une table d'assemblage configurée pour accueillir et maintenir les ailettes parallèlement les unes aux autres, leurs orifices de passage des tubes étant respectivement placés dans le prolongement les uns des autres. Il comprend également des moyens d'introduction et de guidage des olives dans les tubes.

Une fois les ailettes positionnées et maintenues sur la table, les tubes sont introduits dans les ailettes puis les moyens d'introduction et de guidages des olives dans les tubes sont actionnés pour provoquer l'expansion desdits tubes. Un faisceau d'échange de chaleur est alors constitué sur lequel on pourra rapporter des boîtes collectrices selon toutes méthodes connues de l'homme de l'art.

## Revendications

1. Procédé de fabrication d'un échangeur de chaleur, notamment automobile, procédé dans lequel on introduit des tubes (3) de circulation de fluide dans des orifices de passage (7) d'ailettes (4) d'échange de chaleur et on soumet les tubes (3) de circulation de fluide à une expansion de sorte à élargir un contour (22) desdits tubes (3) pour assurer un contact avec lesdites ailettes (4) au niveau desdits orifices de passage (7) et, de manière supplémentaire, pour au moins un desdits tubes (3), à déformer une partie concave (24) du contour (22) du ou desdits tubes (3), **caractérisé en ce que** la déformation de ladite partie concave (24) est réalisée de façon à obtenir en correspondance une déformation desdits orifices de passage (7).

2. Procédé selon la revendication 1 dans lequel ladite expansion est configurée de sorte à créer une ou des protubérances (28), saillantes en direction des ailettes (4), provoquant ladite déformation des orifices de passage (7) prévue dans la partie concave (24) du tube (3).

3. Procédé selon la revendication 2 dans lequel la ou lesdites protubérances (28) sont réalisées par déformation de la matière du tube (3).

4. Procédé selon l'une quelconque des revendications 2 ou 3 dans lequel la ou les protubérances (28) se présentent sous la forme d'un pli de la matière du tube.

5. Procédé selon la revendication 4 dans lequel le pli se présente sous la forme d'un dièdre au sommet arrondi.

6. Procédé selon l'une quelconques des revendications 2 à 5 dans lequel la ou lesdites protubérances (28) s'étendent selon un axe longitudinal des tubes (3).

7. Procédé selon l'une quelconque des revendications 2 à 6 dans lequel la ou lesdites protubérances (28) sont situées dans un fond de ladite partie concave (24).

8. Procédé selon l'une quelconque des revendications 2 à 7 dans lequel les tubes (3) comprennent deux grandes faces (30) reliées par des flancs latéraux (32) du tube, chacune des grandes faces (30) étant munie d'une dite partie concave (24) du contour (22), et dans lequel chaque dite partie concave (24) est munie d'une ou plusieurs dites protubérances (28).

9. Procédé selon l'une quelconque des revendications précédentes dans lequel, avant expansion, les orifices de passages (7) des ailettes (4) présentent un contour de forme homologue à celle du contour (22) des tubes (3).

10. Procédé selon l'une quelconque des revendications précédentes dans lequel les ailettes (4) sont munies, au niveau desdits orifices (7) de passage, de collets (11) destinés à augmenter la surface de contact avec les tubes (3) et ladite expansion est configurée pour déformer lesdits collets (11).

## Patentansprüche

1. Verfahren zur Herstellung eines Wärmetauschers, insbesondere für ein Kraftfahrzeug, wobei bei diesem Verfahren Fluidzirkulationsrohre (3) in Durchlassöffnungen (7) von Wärmetauschflügeln (4) eingeführt werden und die Fluidzirkulationsrohre (3) einer Dehnung unterzogen werden, so dass eine Kontur (22) der Rohre (3) erweitert wird, um einen Kontakt mit den Flügeln (4) im Bereich der Durchlassöffnungen (7) zu gewährleisten und um zusätzlich bei wenigstens einem der Rohre (3) einen konkaven Teil (24) der Kontur (22) des Rohrs oder der Rohre (3) zu verformen, **dadurch gekennzeichnet, dass** die Verformung des konkaven Teils (24) derart durchgeführt wird, dass entsprechend eine Verformung der Durchlassöffnungen (7) erzielt wird.

2. Verfahren nach Anspruch 1, wobei die Dehnung dafür ausgelegt ist, einen Vorsprung oder Vorsprünge (28) zu erzeugen, die in Richtung auf die Flügel (4) vorragen, was die Verformung der Durchlassöffnungen (7) hervorruft, die im konkaven Teil (24) des Rohrs (3) vorgesehen ist.

3. Verfahren nach Anspruch 2, wobei der Vorsprung oder die Vorsprünge (28) durch eine Verformung des Materials des Rohrs (3) gebildet werden.

4. Verfahren nach einem der Ansprüche 2 oder 3, wobei der Vorsprung oder die Vorsprünge (28) in der Form eines Knicks des Materials des Rohrs vorliegen.

5. Verfahren nach Anspruch 4, wobei der Knick in der Form eines Dieders mit abgerundeter Spitze vorliegt.

6. Verfahren nach einem der Ansprüche 2 bis 5, wobei sich der Vorsprung oder die Vorsprünge (28) gemäß einer Längsachse der Rohre (3) erstrecken.

7. Verfahren nach einem der Ansprüche 2 bis 6, wobei der Vorsprung oder die Vorsprünge (28) in einem Boden des konkaven Teils (24) angeordnet sind.

8. Verfahren nach einem der Ansprüche 2 bis 7, wobei die Rohre (3) zwei große Seiten (30) umfassen, die durch seitliche Flanken (32) des Rohrs miteinander verbunden sind, wobei jede der großen Seiten (30) mit einem konkaven Teil (24) der Kontur (22) versehen ist und wobei jeder konkave Teil (24) mit einem oder mehreren der Vorsprünge (28) versehen ist.

9. Verfahren nach einem der vorhergehenden Ansprüche, wobei die Durchlassöffnungen (7) der Flügel (4) vor der Dehnung eine Kontur aufweisen, deren Form jener der Kontur (22) der Rohre (3) entspricht.

10. Verfahren nach einem der vorhergehenden Ansprüche, wobei die Flügel (4) im Bereich der Durchlassöffnungen (7) mit Hälsen (11) versehen sind, die dazu bestimmt sind, die Kontaktfläche mit den Rohren (3) zu vergrößern, und wobei die Dehnung dafür ausgelegt ist, die Hälse (11) zu verformen.

## Claims

1. A method for producing a heat exchanger, notably for a motor vehicle, in which fluid flow lines (3) are inserted into through-holes (7) in heat-exchange fins (4) and the fluid flow lines (3) are expanded such as to widen a contour (22) of said lines (3) to ensure contact with said fins (4) at said through-holes (7) and, additionally, for at least one of said lines (3), to deform a concave portion (24) of the contour (22) of the line or lines (3), **characterized in that** said concave portion (24) is deformed such as to obtain a matching deformation in said through-holes (7).

2. Method according to claim 1, in which said expansion is designed to create one or more protuberances (28) projecting towards the fins (4), causing said deformation of the through-holes (7) in the concave portion (24) of the line (3).

3. Method according to Claim 2, in which the protuberance or protuberances (28) are made by deforming the material of the line (3).

4. Method according to any one of Claims 2 or 3, in which the protuberance or protuberances (28) are folds in the material of the line.

5. Method according to Claim 4, in which the fold is a dihedral with a rounded apex.

6. Method according to any one of Claims 2 to 5, in which the protuberance or protuberances (28) extend along a longitudinal axis of the lines (3).

7. Method according to any one of Claims 2 to 6, in which the protuberance or protuberances (28) are arranged in a bottom of said concave portion (24).

8. Method according to any one of Claims 2 to 7, in which the lines (3) have two large faces (30) connected by the lateral flanks (32) of the line, each of the large faces (30) having one such concave portion (24) of the contour (22), and in which said concave portion (24) has one or more of said protuberances (28).

9. Method according to any one of the preceding claims, in which, before expansion, the through-holes (7) in the fins (4) have a contour similar in shape to the contour (22) of the lines (3).

10. Method according to any one of the preceding claims, in which the fins (4) have collars (11) at said through-holes (7) that are designed to increase the contact surface with the lines (3) and said expansion is designed to deform said collars (11).
